# EUROPEAN PATENT APPLICATION

(11) **EP 1 292 132 A1**
(43) Date of publication of application: **12.03.2003**
(21) Application number: 02255966.0
(22) Date of filing: 28.08.2002
(51) Int. Cl.: H04N 5/44

(54) **Communication connection for an audio/visiual display monitor**

(30) Priority: 30.08.2001 GB 0121005
(71) Applicant: Rees, Ian Paul, Weybridge, Surrey KT15 1DP (GB)
(72) Inventor: Rees, Ian Paul, Weybridge, Surrey KT15 1DP (GB)
(74) Representative: Butler, Lance

(57) **Abstract**

A connector (10) for connecting a decoder (15) to an audio/visual display remote monitor (19) having a screen comprises a cable conforming to CATS protocol and a junction box (11) at one end portion thereof for connecting to an electrical input (12), an audio/video input (13) and an infrared input (14) whereby control of the decoder (15) can be effected by a remote controller (17) directing infrared signals to a receptor (23) of the monitor.

## Description

This invention relates to a connector for an audio/visual display monitor.

It is known to provide cables which conform to CAT5 protocol for supplying telecommunications signals from a source to different locations. Such an arrangement may be provided in a building so that telecommunications signals can be linked to terminals in different rooms of the building whereby a receiver may be connected to any one of the terminals so as to receive signals transmitted thereto by a corresponding one of the cables. According to the CAT5 protocol, a cable would comprise eight twin conductors.

Generally, receivers require a source of electrical power and this presents a problem if the electrical power required and the environment in which it is received would be such as to be a danger to human life.

It would be undesirable, for example, to provide a television receiver in a bathroom since, unless the receiver were to be completely sealed, any moisture could cause short circuiting of voltage through wet surfaces which may be touched, with the risk of life threatening consequences and a danger to human life.

However, there is a demand for providing television receivers in areas where there is a likelihood of exposure to moisture, such as in bathrooms and kitchens.

Accordingly, it is desirable to provide a system whereby viewing of television is possible in areas likely to be exposed to moisture without risk to human life.

It is also desirable to provide a television monitor which, in use, is flush with a wall and which is sealed against moisture.

According to the present invention, there is provided a connector for an audio/visual display monitor comprising a cable conforming to CAT5 protocol, a junction box provided at one end portion of the cable for connecting a first conductor of the cable to an electrical power source, a second conductor of the cable to an audio signal input, a third conductor of the cable to a video signal input and a fourth conductor of the cable to a signal controller and terminal means provided at a remote end portion of the cable whereby the connector is adapted to be connected to the monitor.

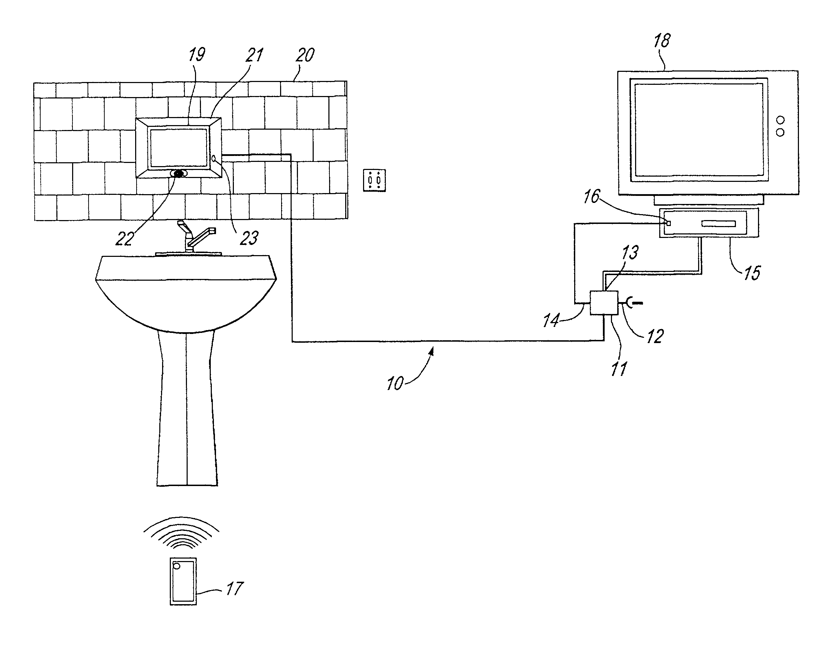

Following is a description, by way of example only and with reference to the accompanying drawing, which is a diagrammatic representation, of one method of carrying the invention into effect.

Referring to the drawing, there is shown a connector 10 which conforms to CAT5 protocol in that it comprises eight pairs of twin conductors, one end portion of the connector being provided with a junction box 11 and a remote end portion of the connector 10 being provided with the terminal (not shown).

The junction box 11 is adapted to receive a 12 volt electrical input 12, an audio/video input 13 and an infrared input 14. The audio/video input 13 is connected to a decoder 15 which is adapted to receive signals from an antenna (not shown). The infrared input 14 is connected to an output 16 of the decoder 15, the output 16 being included in a control circuit (not shown) for controlling selection of television programmes and sound and video characteristics. The circuit may be operated from a remote controller 17. The decoder 15 is connected to a television receiver 18.

The remote terminal of the connector 10 is received in a socket (not shown) of a back box (not shown) located behind a thin film technology (TFT) audio/visual display monitor screen 19 which is inset in a wall 20 of a bathroom so that an outer surface of the screen 19 is flush with an outer surface of the wall 20. The screen 19 is surrounded by a bezel 21 which includes a speaker 22 and a receptor 23 for receiving signals from the remote controller 17.

The arrangement is such that one pair of conductors of the connector 10 provides audio signals, a second pair of the conductors provides video signals, a third of the conductors provides a voltage and a fourth pair of the conductors provides an infrared signal for controlling operation of the control circuit in the decoder 15.

Therefore, power is supplied to the screen 19, as are audio/video signals from the decoder 15. The audio/video signals are selectively controlled by operation of the decoder 15 controlled by the remote controller 17. The decoder 15 and the television receiver 18 would be located in, for example, a living area separate from the bathroom.

However the audio/video signals received by the television receiver 18 may also be received by the remote audio/visual display monitor upon operation of the remote controller 17 to produce signals incident on the receptor 23. The receptor 23 thus receives infrared signals from the remote controller 17 and the signals are relayed through the connector 10 and the junction box 11 to the decoder 15 so as to control the decoder 15 to operate the operating circuit in the decoder to provide audio/video signals from the decoder 15 back to the audio/video input 13 and to the audio/visual display monitor.

In this manner, a connector in accordance with the present invention provides a means for connecting a decoder to a remote audio/visual display monitor without the necessity of also providing power to the monitor at a voltage which would be dangerous to human life.

The connector 10 may be provided with a balun (not shown) for altering the impedance characteristics and balancing the signal.

Since the remote audio/visual display monitor only requires means for connecting to the connector, only a small recess is required in a wall within which to locate the monitor. Therefore, the monitor is locatable in most bathroom walls such as to be flush with any such wall and sealed against moisture.

## Claims

1. A connector (10) for an audio/visual display monitor (19) **characterised by** a cable (10) conforming to CAT5 protocol, a junction box (11) provided at one end portion of the cable (10) for connecting first conductors of the cable to an electrical power source (12), second conductors of the cable to an audio signal input (13), third conductors of the cable to a video signal input (13) and fourth conductors of the cable to a signal controller (15) and terminal means provided at a remote end portion of the cable whereby the connector is adapted to be connected to the monitor (19).

2. A connector as claimed in Claim 1 **characterised in that** the connector (10) includes a balun.

3. A connector according to Claim 1 **characterised in that** the signal controller (15) is a decoder connected to a television receiver (18).

4. A connector as claimed in Claim 3 **characterised in that** the monitor (19) is provided with a receptor (23) and a remote controller (17) is adapted to control the operation of the monitor (19).

5. A connector as claimed in Claim 4 **characterised in that** the controller (17) is adapted to control the operation of the monitor (19) through the decoder (15).
